# EUROPÄISCHE PATENTSCHRIFT

(11) **EP 0 818 083 B1**
(45) Veröffentlichungstag und Bekanntmachung des Hinweises auf die Patenterteilung: **20.01.1999**
(21) Anmeldenummer: 96907454.1
(22) Anmeldetag: 13.03.1996
(51) Int. Cl.: H04B 3/02

(54) **VERFAHREN ZUM ERZEUGEN VON WECHSELSPANNUNGSINFORMATION FÜR EIN BUSSYSTEM UND SENDESTUFE ZUR DURCHFÜHRUNG DES VERFAHRENS**
METHOD OF GENERATING A.C. INFORMATION FOR A BUS SYSTEM, AND TRANSMISSION UNIT FOR CARRYING OUT THE METHOD
TECHNIQUE DE GENERATION D'INFORMATIONS DE TENSION ALTERNATIVE POUR UN SYSTEME DE BUS, ET UNITE DE TRANSMISSION POUR L'APPLICATION DE CETTE TECHNIQUE

(30) Priorität: 30.03.1995 EP 95104725
(43) Veröffentlichungstag der Anmeldung: 14.01.1998
(73) Patentinhaber: SIEMENS AKTIENGESELLSCHAFT, 80333 München (DE)
(72) Erfinder: ZIERHUT, Hermann, verstorben (DE)
(86) Internationale Anmeldenummer: EP9601070
(87) Internationale Veröffentlichungsnummer: WO9631012

(56) Entgegenhaltungen:
- EP-A- 0 365 696
- EP-A- 0 487 874

## Beschreibung

Die Erfindung bezieht sich auf eine Sendestufe für den Transceiver der Teilnehmerstation eines Bussystems, insbesondere des Busses der European Installation Bus Assosiation, EIBA, im einzelnen nach Gattungsbegriff von Patentanspruch 1.

Einer Gleichspannung des Busses ist eine im wesentlichen symmetrische Wechselspannungsinformation als Bitinformation überlagert, indem ein Gleichspannungspotential einer Leitung unter induktiver Belastung jeweils in einem Aktivimpuls gegen das Potential einer anderen Leitung gezogen wird, wobei anschließend zur Energierückgewinnung ein Ausgleichsimpuls gebildet ist. Derartige Busankoppler sind bekannt (EP-B-0 365 696, EP-B-0 379 901, EP-B-0 379 902). Derartige Busankoppler arbeiten üblicherweise mit Übertragern, wobei das Gleichspannungspotential einer Leitung unter induktiver Belastung jeweils in einem Aktivimpuls gegen das Potential einer anderen Leitung gezogen wird. Im Sender des EIB-Tranceivers wird der Bit-Impuls auf dem Bus so generiert, daß der Bus-Gleichspannung von etwa 24 Volt jeweils ein Aktivimpuls mit einer Amplitude von etwa 7 Volt überlagert wird (EP-B-0 365 696). Man arbeitet hierbei mit einem Übersetzungsverhältnis von etwa 3 : 1.

Der Erfindung liegt die Aufgabe zugrunde, eine Sendestufe zu entwickeln, bei der man ohne Übertrager auskommt.

Die Lösung der geschilderten Aufgabe erfolgt nach der Erfindung durch eine Sendestufe nach Patentanspruch 1. Der Aktivimpuls der Bitinformation mit einer Bitfrequenz wird hierbei aus Einzelimpulsen höherer Frequenz gebildet. Im einzelnen wird der Aktivimpuls der Bitinformation mit einer Bitfolgefrequenz in einem Generator zur Erzeugung von Einzelimpulsen höherer Frequenz gewonnen. Hierbei ist der Generator im Zusammenwirken mit einem Kondensator einer internen Bordnetzversorgung als hochfrequenter Aufwärtsregler ausgeführt, wobei Spannungsquelle für den Aufwartsregler der Bus ist und Regelkriterium für den Aufwartsregler der Spannungseinbruch während des Aktivimpulses. Vorteilhafterweise wird eine sehr hohe Frequenz im Vergleich zur Bitfolgefrequenz verwendet, so daß der Ubertrager auf eine sehr kleine Induktivität in Form einer Drossel reduziert werden kann.

Bei der Sendestufe für den Transceiver der Teilnehmerstation eines Bussystems wird also mit einem Generator zur Erzeugung von Einzelimpulsen höherer Frequenz als der Bitfolgefrequenz gearbeitet. Die Spannungsabsenkung während eines Aktivimpulses wird hierbei durch Stromimpulse hoher Frequenz in einem Schaltnetzteil bzw. über einen Sendetransistor wellig aber im Prinzip rechteckförmig nachgebildet, wobei die Nachbildung um so besser ist, je höher die Frequenz der Einzelimpulse ist. Es wird mit einem Generator gearbeitet, der als hochfrequenter Aufwärtsregler ausgelegt ist.

Bei einer Multiplex-Einrichtung (EP-A-0 487 874) ohne Energierückgewinnung wird mit mehreren Nachrichten gearbeitet, und es wird nicht ein Bitimpuls nachgebildet.

Bei der Sendestufe erfolgt dagegen eine Energierückgewinnung, und zwar nach dem Prinzip des Step-Up-Schaltreglers. Dieser ist jedoch so umkonzipiert, daß er nicht die Ausgangsspannung regelt, sondern den Einbruch der Eingangsspannung, also den Aktivimpuls in seiner Amplitude Hierbei kann die Eingangskapazität im Vergleich zu einem üblichen Step-Up-Schaltregler gegen Null oder gar bis auf Null vermindert werden. Dies ist besonders vorteilhaft, da der Bus nicht kapazitiv belastet werden soll.

Auf vorteilhafte Ausgestaltungen beziehen sich die Unteransprüche 2 bis 4. Dadurch ist es möglich, die Sendestufenschaltung nach Anspruch 5 als Teil eines integrierten Schaltkreises, eines IC, auszuführen.

Die Erfindung soll nun anhand von in der Zeichnung grob schematisch wiedergegebenen Ausführungsbeispielen näher erläutert werden:

In FIG 1 ist eine Sendestufe veranschaulicht.

In FIG 2 ist der Stromverlauf im Sendeventil während eines Aktivimpulses dargestellt.

In FIG 3 ist im oberen Kurvenverlauf die Busspannung bei Überlagerung durch einen Aktivimpuls und darunter der Busstrom während der Überlagerung durch einen Aktivimpuls zusammen mit anschließender Energierückgewinnung wiedergegeben.

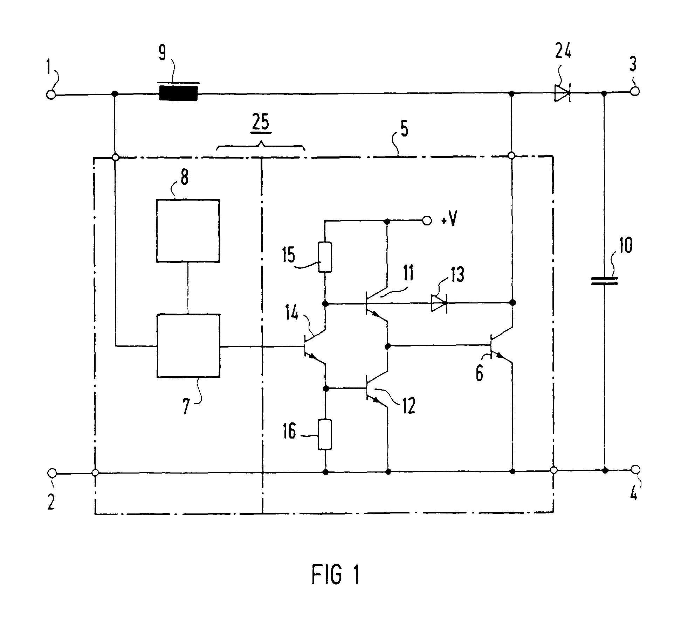

Die Sendestufe nach FIG 1 ist mit Anschlüssen 1 und 2 an einem Zweileiterbus angeschlossen, wobei parallel hierzu weitere Teilnehmerstationen angeschaltet werden können. An Anschlüssen 3, 4 der Sendestufe kann eine Bordnetzversorgung bzw. eine Hilfsspannungsquelle angeschlossen werden. Die Sendestufe weist ein Schaltnetzteil 5 mit einem Sendeventil, beispielsweise einem Sendetransistor 6, auf. Das Schaltnetzteil 5 ist mit einem Pulsweitenmodulator 7 verbunden, an dem ein Oszillator 8 angeschlossen ist, der vorteilhaft auf die gewünschte Schaltfrequenz des Sendetransistors 6 abgestimmt sein kann.

Die Sendeschaltung arbeitet wie folgt:

An den Anschlüssen 1, 2 liegt die Busgleichspannung an, der die Bit-Impulse der Information überlagert werden sollen. Wenn der Sendetransistor 6 leitend wird, liegt die volle Busgleichspannung über eine Drossel 9 an. Es beginnt ein Strom entsprechend der treibenden Busgleichspannung und der Induktivität der Drossel 9 rasch ansteigend zu fließen, wobei der Strom an den Anschlüssen 1 und 2 einen entsprechenden Spannungsfall verursacht. Ist ein Zyklus, der durch den Oszillator mit der Oszillatorfrequenz vorgegeben ist, abgeschlossen, so wird das Sendeventil 6 sperrend und die in der Drossel gespeicherte Energie fließt in einen Kondensator 10 ab. Die den einzelnen Stromimpulsen zugeordnete Energie wird bei der Energierückgewinnung nach und nach in den Kondensator 10 geladen.

Für ein gutes Arbeiten der Sendestufe ist das Sendeventil 6 von wesentlicher Bedeutung. Es hat mit hoher Frequenz ohne größere Eigenverluste sauber zu schalten. Entsprechend ist bei einem Sendetransistor die Sättigung zu vermeiden, und er ist niederohmig auf- und zuzusteuern. Nach einer Weiterbildung der Erfindung wird die Ansteuerschaltung eines Sendetransistors 6 nach Anspruch 4 als Pusch-Pull-Stufe ausgebildet, bei der von zwei in Serie geschalteten und im Gegentakt beschalteten Transistoren 11 und 12 der Transistor 12 insbesondere nach Anspruch 5 über eine Diode 13 gesperrt wird, wenn die Kollektorspannung des Sendetransistors 6 eine bestimmte Spannung unterschreitet. Im Vergleich zu einem üblichen Aufwärtsregler ist hervorzuheben, daß sein Regelkriterium nicht, wie üblich, die Ausgangsspannung ist, sondern der Einbruch der Eingangsspannung, also die Amplitude des Aktivimpulses. Es hat sich überraschenderweise gezeigt, daß hierdurch eine besonders gute Nachbildung von Rechteckinformation gewährleistet ist.

Die Ansteuerschaltung des Sendetransistors 6 kann vorteilhaft nach FIG 1 ausgeführt sein:

Die Basis des Sendetransistors 6 ist als Steuerelektrode mit den im Gegentakt arbeitenden und in Serie angeordneten Transistoren 11 und 12 zwischen diesen angeschlossen. Die Steuerelektroden der im Gegentakt arbeitenden Transistoren 11 und 12, jeweils die Basis, sind an Kollektor bzw. Emitter eines Transistors 14 angeschlossen, der zugleich über Induktivitäten 15, 16 an positive Sendespannung angeschlossen ist. Auf die Basis des Transistors 14 arbeitet der Pulsweitenmodulator 7, der vom Oszillator 8 beaufschlagt ist. Der Transistor 11 der im Gegentakt arbeitenden Transistoren 11, 12, dessen Emitter mit der Basis des Sendetransistors 6 verbunden ist, ist mit seiner Basis über eine Diode 13 mit dem Kollektor des Sendetransistors verbunden.

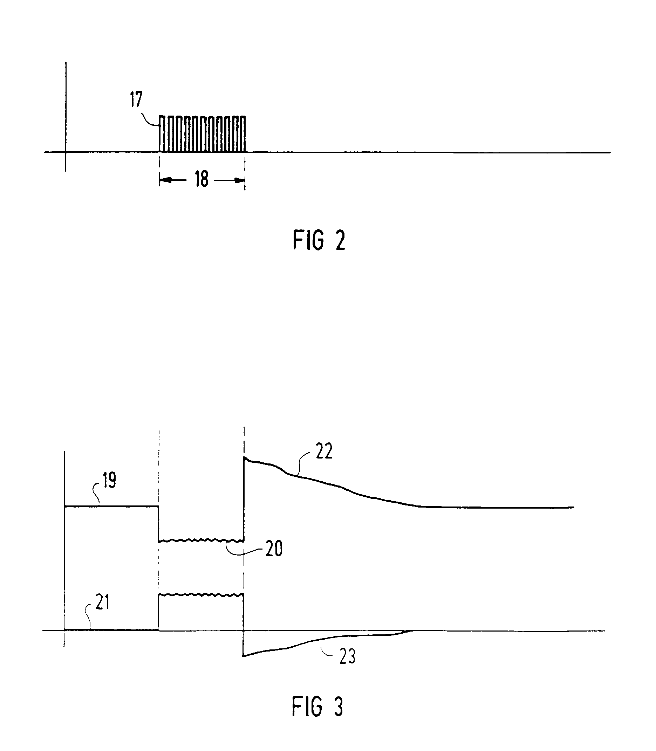

Wenn der Sendetransistor 6 entsprechend der Oszillatorfrequenz des Oszillators 8 leitend gesteuert wird, läßt er Einzelimpulse 17 nach FIG 2 durch, die eine wesentlich höhere Frequenz aufweisen, als die Frequenz eines Bit-Impulses 18. Entsprechend fällt die Busspannung 19 nach FIG 3 jeweils während eines Aktivimpulses 20 ab, der entsprechend den Einzelimpulsen 17 eine gewisse Welligkeit aufweist. Um so höher die Frequenz der Einzelimpulse 17 ist, um so besser wird der Aktivimpuls 20 rechteckförmig nachgebildet. Wenn die Frequenz der Einzelimpulse 17 des Schaltnetzteils 5 etwa das Fünfzigfache der Frequenz der Folge der Bitimpulse beträgt, ist die Welligkeit vernachlässigbar. Dem Verlauf der Busspannung 19 entsprechend, wird ein Busstrom 21 nach FIG 3, unterer Darstellung, verändert. Ausgleichsimpulse 22 bzw. 23 entsprechen der Energierückgewinnung.

Der Pulsweitenmodulator 7 regelt jeweils die Dauer der Schließzeit bzw. Leitendsteuerung des Sendetransistors 6. Die Schließzeit ist beendet, wenn die erforderlich Amplitude für den Bitimpuls erreicht ist, wobei die Amplitude dann unabhängig von der Busspannung konstant gehalten bleibt. Die Amplitude des Aktivimpulses wird durch den Pulsweitenmodulator 7 vorteilhaft auf einen vorgegebenen Wert konstant geregelt, unabhängig von der jeweiligen Busspannung.

Verständlicherweise können die Bauelemente im Ausführungsbeispiel nach FIG 1 durch inverse Bauelemente ersetzt werden, wobei bei den Dioden dann Kathode und Anode zu vertauschen ist.

Am Kollektor des Sendetransistors 6 ist der Kondensator 10 der internen Bordnetzversorgung, bzw. einer Hilfsspannungsversorgung, über ein Ventil 24, im Ausführungsbeispiel eine Diode, mit der Funktionsweise angeschlossen, daß das Ventil leitend ist bei sperrendem Sendetransistor und daß es sperrend ist bei leitendem Sendetransistor 6.

Durch die geschilderten Maßnahmen ist es möglich, den Generator 25 aus Schaltnetzteil 5, Pulsweitenmodulator 7 und Oszillator 8 und die gesamte Sendestufe einschließlich der Drossel 9 und weiterer zugeordneter Bauelemente als Teil eines integrierten Schaltkreises auszuführen.

## Patentansprüche

1. Sendestufe für den Tranceiver der Teilnehmerstation eines Bussystems, insbesondere des Busses der EIBA, die einer Gleichspannung des Busses eine im wesentlichen symmetrische Wechselspannungsinformation als Bitinformation überlagert, indem ein Gleichspannungspotential (19) unter induktiver Belastung (9) jeweils in einem Aktivimpuls (20) gegen das Potential der anderen Leitung gezogen wird und unter anschließender Energierückgewinnung ein Ausgleichsimpuls (22; 23) gebildet wird,
**dadurch gekennzeichnet,**
daß der Aktivimpuls (20) der Bitinformation mit einer Bitfolgefrequenz in einem Generator (25) zur Erzeugung von Einzelimpulsen (17) höherer Frequenz gewonnen ist, wobei der Generator (25) im Zusammenwirken mit einem Kondensator (10) einer internen Bordnetzversorgung als hochfrequenter Aufwärtsregler ausgeführt ist, wobei Spannungsquelle für den Aufwartsregler der Bus (1, 2) ist und Regelkriterium für den Aufwärtsregler der Spannungseinbruch während des Aktivimpulses (20).

2. Sendestufe nach Anspruch 1,
**dadurch gekennzeichnet,**
daß der Generator (25) mit einem Sendetransistor (6) als Sendeventil und einer Ansteuerschaltung arbeitet, die zwei in Serie geschaltete und im Gegentakt beschaltete Transistoren (11, 12) aufweist, wobei die Ansteuerschaltung über einen Pulsweitenmodulator (7) mit einem Oszillator (8) verbunden ist, dessen Oszillatorfrequenz auf die höhere Frequenz eingestellt ist.

3. Sendestufe nach Anspruch 2,
**dadurch gekennzeichnet,**
daß der Pulsweitenmodulator (7) mit einer Ansteuerschaltung zur Bildung des Integrals der Spannungsamplitude während des Aktivimpulses (20) versehen ist.

4. Sendestufe nach Anspruch 1 und einem der vorhergehenden Ansprüche,
**dadurch gekennzeichnet,**
daß am Kollektor des Sendetransistors (6) der Kondensator (10) der internen Bordnetzversorgung über ein Ventil (24) mit der Funktionsweise angeschlossen ist, daß es leitend ist bei sperrendem Sendetransistor (6) und daß es sperrend ist bei leitendem Sendetransistor (6).

5. Sendestufe nach einem der vorhergehenden Ansprüche,
**dadurch gekennzeichnet,**
daß sie als Teil eines integrierten Schaltkreises ausgeführt ist.

## Claims

1. Transmission stage for the transceiver of the subscriber station of a bus system, in particular of the EIBA bus, which superposes on a DC voltage of the bus an essentially balanced AC voltage information item as bit information in that a DC voltage potential (19) is pulled towards the potential of the other line under inductive loading (9) in each case in an active pulse (20) and, with subsequent energy recovery, a compensation pulse (22; 23)is formed,
characterized
in that the active pulse (20) of the bit information having a bit repetition rate is obtained in a generator (25) for generating individual pulses (17) of higher frequency, the generator (25) being designed in interaction with a capacitor (10) of an internal on-board electrical supply as high-frequency step-up regulator, the voltage source for the step-up regulator being the bus (1, 2) and the regulating criterion for the step-up regulator being the voltage dip during the active pulse (20).

2. Transmission stage according to Claim 1,
characterized
in that the generator (25) operates with a transmission transistor (6) as transmission valve and a drive circuit which has two transistors (11, 12), which are connected in series and wired up in a push-pull manner, the drive circuit being connected via a pulsed width modulator (7) to an oscillator (8), whose oscillator frequency is set to the higher frequency.

3. Transmission stage according to Claim 2,
characterized
in that the pulse width modulator (7) is provided with a drive circuit for forming the integral of the voltage amplitude during the active pulse (20).

4. Transmission stage according to Claim 1 and one of the preceding claims,
characterized
in that the capacitor (10) of the internal on-board electrical supply is connected to the collector of the transmission transistor (6) via a valve (24) with the method of operation that it is in the on state when the transmission transistor (6) is in the off state and that it is in the off state when the transmission transistor (6) is in the on state.

5. Transmission stage according to one of the preceding claims,
characterized
in that it is designed as part of an integrated circuit.

## Revendications

1. Etage émetteur pour l'émetteur-récepteur de la station d'utilisateur d'un système de bus, notamment du bus de la EIBA, qui superpose à une tension continue du bus une information de tension alternative sensiblement symétrique comme information binaire, un potentiel de tension continue (19) sous charge inductive (9) étant tiré chaque fois dans une impulsion active (20) vers le potentiel de l'autre ligne et une impulsion d'égalisation (22 ; 23) étant formée ensuite pour la récupération d'énergie,
caractérisé par le fait que
l'impulsion active (20) de l'information binaire ayant un certain débit binaire est obtenue dans un générateur (25) pour la production d'impulsions individuelles (17) de fréquence supérieure, le générateur (25) étant conçu, en coopération avec un condensateur (10) d'une alimentation de réseau de bord interne, comme un régulateur élévateur à haute fréquence, la source de tension pour le régulateur élévateur étant le bus (1, 2) et le critère de régulation pour le régulateur élévateur étant la chute de tension pendant l'impulsion active (20).

2. Etage émetteur selon la revendication 1,
caractérisé par le fait que
le générateur (25) fonctionne avec un transistor d'émission (6) comme valve d'émission et avec un circuit de commande qui comporte deux transistors (11, 12) branchés en série et en symétrie, le circuit de commande étant relié par l'intermédiaire d'un modulateur de largeur d'impulsion (7) à un oscillateur (8) dont la fréquence d'oscillation est réglée sur la fréquence supérieure.

3. Etage émetteur selon la revendication 2,
caractérisé par le fait que
le modulateur de largeur d'impulsion (7) est muni d'un circuit de commande pour la formation de l'intégrale de l'amplitude de tension pendant l'impulsion active (20).

4. Etage émetteur selon la revendication 1 et l'une des revendications précédentes,
caractérisé par le fait que
le collecteur du transistor d'émission (6) est raccordé au condensateur (10) de l'alimentation de réseau de bord interne par l'intermédiaire d'une valve (24) qui est conductrice lorsque le transistor d'émission (6) est bloquant et qui est bloquante lorsque le transistor d'émission (6) est conducteur.

5. Etage émetteur selon l'une des revendications précédentes,
caractérisé par le fait qu'
il est mis en oeuvre comme une partie d'un circuit intégré.
